# EUROPEAN PATENT SPECIFICATION

(11) **EP 2 335 925 B1**
(45) Date of publication and mention of the grant of the patent: **07.09.2016**
(21) Application number: 09818948.3
(22) Date of filing: 05.10.2009
(51) Int. Cl.: B32B 27/36, C08G 18/83, C08J 7/04, G02B 5/00, G02F 1/1335

(54) **BIAXIALLY STRETCHED POLYESTER FILM**
BIAXIAL GEDEHNTER POLYESTERFILM
FILM POLYESTER ÉTIRÉ BIAXIALEMENT

(30) Priority: 06.10.2008 JP 2008259721
(43) Date of publication of application: 22.06.2011
(73) Proprietor: Mitsubishi Plastics, Inc., Tokyo 103-0021 (JP)
(72) Inventor: MASUDA, Narihiro, Maibara-shi Shiga-ken 521-0234 (JP); KODA, Toshihiro, Maibara-shi Shiga-ken 521-0234 (JP); FUJITA, Masato, Maibara-shi Shiga-ken 521-0234 (JP)
(74) Representative: Ter Meer Steinmeister & Partner
(86) International application number: PCT/JP2009/005146
(87) International publication number: WO 2010/041408

(56) References cited:
- JP-A- 2 158 633
- JP-A- 4 232 789
- JP-A- 2003 080 825
- JP-A- 2006 022 222
- JP-A- 2008 081 551

## Description

### TECHNICAL FIELD

The present invention relates to a biaxially stretched polyester film which is suitably used, for example, as a base film of an optical member for liquid crystal displays.

### BACKGROUND ART

In recent years, liquid crystal display devices have been rapidly spread and increased in number and volume of production and sales thereof. The liquid crystal display devices are generally constructed from two units including a backlight unit serving for converging light emitted from a light source on a visible side thereof and having a function as a uniform surface light source, and a liquid crystal cell layer unit serving for controlling a voltage applied to every display pixel to allow the respective display pixels to display each of a red color light, a green color light and a blue color light in a well-controlled light amount.

Among these units, the backlight unit is constituted from a cold cathode tube light source using a fluorescent substance having luminescent characteristics in wavelength ranges of red color light, green color light and blue color light which is disposed on a side face thereof when viewed from a visible side of the display device, a light guide plate having a function of efficiently introducing the light to the visible side, a diffusion film having a function of uniformly dispersing the light introduced on the visible side in a in-plane direction of the display, and a prism sheet having a function of enhancing a luminance of the display by converging the light oriented to the side face of the display toward the visible side of the display.

In general liquid crystal displays, the backlight unit includes a light guide plate, a diffusion plate usually called a lower diffuser which is disposed on the light guide plate, two prism sheets disposed on the lower diffuser such that light converging directions of the prism sheets are oriented in the longitudinal direction and lateral direction, respectively, and a diffusion plate usually called an upper diffuser which is disposed on the two prism sheets. In recent years, in addition to the above construction, the backlight unit has been constituted from a variety of combinations of prism sheets and diffusion plates, for example, for the purposes of further enhancing a light converging property or a light diffusion property, reducing a thickness of the backlight unit by decreasing the number of the prism sheets or the diffusion plates used therein, contemplating reduction in production costs, or the like.

The prism sheet as a necessary component of the above backlight unit has a number of lens units (prism units) each having a prism shape in which fine triangular pyramids or triangular prism are arranged in rows, or having a semispherical micro-lens shape (the layer having these prism units is hereinafter generally referred to as a "lens layer", and the sheet having the lens layer is hereinafter generally referred to as a "lens sheet"). The lens sheets are usually produced by using a solvent-free ionizing radiation curing resin. The reason for using the solvent-free resin is that the process for producing the lens sheet include no step of drying the solvent. That is, in the production process, the fluidized solvent-free ionizing radiation curing resin is cast over a roll on which a number of mold cavities each having a triangular pyramid shape or a semispherical shape are formed, and then a base film is pressed against the resin on the roll and, at the same time, an ionizing radiation such as ultraviolet rays is irradiated to the resin from a backside thereof to cure the resin, followed by releasing the base film from the roll to obtain the lens sheet.

Meanwhile, the optical component films such as a lens sheet and a diffusion plate are usually protected by attaching a polyolefin-based film (such as a polyethylene film and an EVA film) thereto for the purpose of preventing the surface of these films from suffering from flaws or stains. When the optical component films are assembled into the backlight unit, the protective film is released from the respective optical component films. However, when releasing the protective film, peel static electrification tends to frequently occur, and the amount of electrostatic charge generated thereupon tends to sometimes become extremely large, which results in not only poor working efficiency, but also such a possibility that foreign matters are undesirably included in the backlight unit owing to attraction of dirt and dusts thereto. Thus, it has been demanded to further improve these optical component films.

On the other hand, the polyester films often used as a base film for the lens sheets and the diffusion plates are usually subjected to biaxial stretching, so that the surface thereof is highly oriented and crystallized, Therefore, the polyester films tend to be generally deteriorated in adhesion property. For this reason, there have been proposed the methods of improving an adhesion property of a polyester film by forming various easy-bonding layers on the surface of the polyester film. However, the above solvent-free ionizing radiation curing resin comprising no organic solvent tends to exhibit a low penetrating property or a low swelling effect for the easy-bonding layer formed on the polyester film, and therefore tends to be insufficient in adhesion to ordinary easy-bonding layers.

To solve the above conventional problems, the present inventors have already proposed, in Patent Documents 1 and 2, the polyester films which are provided thereon with a coating layer comprising a cationic polymer, and have a less amount of sagging and a good traveling property in a coater. Further, in these Patent Documents, the present inventors have proposed the method of adding a binder such as a polyester, a polyacrylate and a polyurethane together with the cationic polymer to the coating layer in order to enhance an adhesion property to the diffusion layer or the lens layer.

The methods proposed in Patent Documents 1 and 2 have a certain effect of attaining an antistatic property and improving an adhesion property to the diffusion layer or the lens layer. However, since liquid crystal displays are often used under very severe environmental conditions, there is such a market's demand for a base film which is capable of not only maintaining a good antistatic property as described in Patent Documents 1 and 2 but also further exhibiting a still higher adhesion property.

### PRIOR DOCUMENTS

### PATENT DOCUMENTS

Patent Document 1: Japanese Patent Application Laid-Open (KOKAI) No. 2008-81551
Patent Document 2: Japanese Patent Application Laid-Open (KOKAI) No. 2008-81552

### SUMMARY OF THE INVENTION

### Problems to be Solved by the Invention

The present invention has been accomplished to solve the above problems. An object of the present invention is to provide a biaxially stretched polyester film which can exhibit an excellent easy-bonding property to even a solvent-free ionizing radiation curing resin used in a lens layer, etc., and further has a highly enhanced antistatic property.

### Means for Solving Problems

As a result of the present inventors' earnest study, it has been found that the above problems can be solved by forming a coating layer comprising a specific kind of compound on the polyester film. The present invention has been attained on the basis of this finding.

That is, according to the present invention, there is provided a biaxially stretched polyester film as defined in claim 1.

The present invention is described in detail below.

In the biaxially stretched polyester film of the present invention, as the constitutional component of the polyester, there may be used aromatic polyesters such as polyethylene terephthalate and polyethylene 2,6-naphthalate, or copolymers comprising these constitutional resin components as a main component.

When the copolyester is used as the polyester, the content of the third component in the copolyester is preferably not more than 10 mol%. The dicarboxylic acid component of the copolyester may be one or more compounds selected from the group consisting of isophthalic acid, phthalic acid, terephthalic acid, 2,6-naphthalenedicarboxylic acid, 1,4-cyclohexanedicarboxylic acid, adipic acid and sebacic acid, etc. The glycol component of the copolyester may be one or more compounds selected from the group consisting of ethylene glycol, diethylene glycol, propylene glycol, butanediol, 1,4-cyclohexane dimethanol, neopentyl glycol and ethyleneoxide adducts of bisphenol A, etc. Meanwhile, when the content of the third comonomer component used in the copolyester is more than 10 mol%, the resulting film tends to suffer from remarkable deterioration in heat resistance, mechanical strength, solvent resistance, etc.

Among the films comprising the above polyesters, the films obtained from the polyesters comprising polyethylene terephthalate as the constitutional component or copolyesters thereof are preferred because of a suitable balance between properties as a base film and production costs.

Meanwhile, the above polyesters may be produced by conventionally known methods, for example, by the method in which a dicarboxylic acid and a diol are directly reacted with each other to obtain a polyester having a low polymerization degree, or the method in which a lower alkyl ester of a dicarboxylic acid is reacted with a diol in the presence of a conventionally known transesterification catalyst and then the resulting transesterification reaction product is polymerized in the presence of a polymerization catalyst. Examples of the polymerization catalyst include known catalysts such as an antimony compound, a germanium compound, a titanium compound, an aluminum compound and an iron compound. However, there may also be suitably used such a method in which the amount of the antimony compound is limited to zero or not more than 100 ppm to prevent occurrence of fogging in the resulting film. The polymerization may be performed by using such a method in which the respective raw materials are polymerized in a molten state until reaching a desired polymerization degree, or by using the above-mentioned method which is combined with a solid state polymerization method. In particular, in order to reduce an amount of oligomers in the polyester, the solid state polymerization is preferably used in combination.

The intrinsic viscosity of the polyester used in the polyester film is preferably 0.40 to 0.90 dl/g and more preferably 0.45 to 0.85 dl/g. When the intrinsic viscosity of the polyester is too low, the resulting film tends to be deteriorated in mechanical strength. Whereas, when the intrinsic viscosity of the polyester is too high, a melt-extrusion step upon formation of the film tends to undergo an excessively large load and therefore tends to be deteriorated in productivity.

In the present invention, as the method of forming the biaxially stretched film, there may be used ordinary known stretching methods such as a sequential biaxially stretching method and a simultaneous biaxially stretching method, although not particularly limited thereto. For example, in the sequential biaxially stretching method, a sheet obtained by melt-extrusion of the polyester is stretched in a longitudinal direction thereof at a temperature of 70 to 145°C at a stretch ratio of 2 to 6 times by a roll stretching method to obtain a monoaxially stretched film. Next, the thus obtained monoaxially stretched film is stretched within a tenter in the direction perpendicular to the previous stretching direction at a temperature of 80 to 160°C at a stretch ratio of 2 to 6 times and then further heat-treated at a temperature of 150 to 250°C for 1 to 600 sec to obtain a biaxially stretched film. Further, upon the heat treatment, in the heat-treating zone and/or a cooling zone located at an outlet of the heat treatment, the film is preferably subjected to relaxation by 0.1 to 20% in a longitudinal direction and/or a lateral direction thereof. As described hereunder, in the case where the coating layer is formed by in-line coating, it is preferred that at the stage where the film monoaxially stretched in a longitudinal direction thereof is obtained, the coating solution is applied on the film and dried, and then further stretched in the direction perpendicular to the previous stretching direction.

The biaxially stretched polyester film of the present invention may be in the form of a laminated film comprising two or more layers which are laminated on each other by a coextrusion method. The film comprising three or more layers is constituted from two outermost surface layers and an intermediate layer which may have a laminated structure by itself. The thickness of each of the two outermost surface layers is usually not less than 1 µm and preferably not less than 2 µm, and on the other hand, is usually not more than 1/4 and preferably not more than 1/10 of a total thickness of the resulting film.

The biaxially stretched polyester film of the present invention may positively exclude any filler to enhance a transparency thereof. Alternatively, inorganic fine particles or organic fine particles as a filler may be added to the biaxially stretched polyester film or may be deposited therein in order to ensure a good slip property required as a film and prevent occurrence of flaws during the film forming step or post treatments. When no filler is added to the film, it may be contemplated to ensure a slip property and prevent occurrence of flaws by adding fine particles to the coating layer as described below.

The filler added to the polyester film is not particularly limited. Examples of the filler include inorganic fine particles such as silicon oxide, calcium carbonate, magnesium carbonate, calcium phosphate, magnesium phosphate, kaolin and alumina, and crosslinked polymer fine particles such as crosslinked acrylic resins and crosslinked polystyrene resins. Among these fine particles, in order to obtain a film having a high transparency, amorphous silica particles are preferably used because they exhibit a refractive index relatively close to that of the polyesters and a less formation of voids in the biaxially stretched polyester film. These fine particles as the filler usually have an average particle diameter of 0.02 to 5 µm, and may be used alone or in combination of any two or more kinds thereof. The amount of the fine particles added to the polyester is usually in the range of 0.0005 to 1.0% by weight.

These fine particles may be added to an entire part of the polyester film when the film has a single layer structure. When the polyester film has a three or more layer structure, it is preferred that the fine particles be added not to an intermediate layer but to only both surface layers in order to maintain a good transparency of the polyester film and further readily ensure a good slip property thereof. In particular, when the thickness of the polyester film is large (for example, not less than 100 µm), it is effective to add the fine particles only to the both surface layers.

In addition, in order to prevent oligomers in the polyester film from being precipitated or forming foreign matters on the surface of the film, and from causing deterioration in transparency of the film, there may be used the polyester whose oligomer content is reduced. As the polyester having a less oligomer content, there may be employed polyesters obtained by using the polymerization method in combination with the solid state polymerization as described above, polyesters obtained by using a hot water treatment or a water vapor treatment, etc. The polyester having a less oligomer content may be used to form an entire part of the film when the film has a single layer structure, or may be used to form only both the surface layers when the film has a multilayer structure.

Further, the biaxially stretched polyester film of the present invention may also comprise, in addition to the above fine particles, one or more conventionally known additives such as an antioxidant, a thermal stabilizer, a lubricant, a fluorescent brightener, a dye, a pigment, an ultraviolet absorber and a near infrared absorber, if required. These additives are preferably added to the intermediate layer of the polyester film having a three or more layer laminated structure in order to prevent the additives from being precipitated on the surface of the film.

The thickness of the biaxially stretched polyester film of the present invention is not particularly limited, and is usually in the range of 35 to 350 µm and preferably 50 to 250 µm.

It is required that the biaxially stretched polyester film of the present invention is provided on at least one surface thereof with a coating layer which comprises (A) a polyurethane resin comprising the following components a1) and a2) as constitutional units, and (B) a cationic polymer antistatic agent.

a1) Polycarbonate polyol
a2) Compound formed by quaternarizing a tertiary amino group of a chain extender having the tertiary amino group in a molecule thereof.

It is required that the polyurethane resin (A) used in the present invention comprises a polycarbonate unit as a polyol. When using the polyurethane resin comprising the polycarbonate polyol, the resulting coating layer can exhibit a good adhesion property and a wet heat-resistant adhesion property to, in particular, a lens layer which is formed of a solvent-free ionizing radiation curing resin, etc. The reason therefor is considered as follows, although not clearly determined. That is, it is suggested that when bonding the coating layer to the solvent-free type lens layer, a penetrating property and a swelling effect to the coating layer by a solvent is very low. Therefore, it is suggested that the polyol moiety constituting a soft segment of the polyurethane resin which has not only a sufficient flexibility but also a polar functional group well contributes to improvement in adhesion between these layers. In addition, it is suggested that the polycarbonate polyol is excellent in both adhesion property and wet heat-resistant adhesion property owing to an excellent hydrolysis resistance thereof under wet heat conditions.

As the component a1) in the polyurethane resin (A) used in the present invention, there may be mentioned, for example, those compounds obtained by transesterification of a carbonic acid ester including a lower dialkylene carbonate such as diethyl carbonate or diphenyl carbonate with a diol, or those compounds obtained by directly reacting a diol with phosgene. In the present invention, there may be used polycarbonate polyols obtained by using, as the diol, ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Among these polycarbonate polyols, preferred are those polycarbonate polyols obtained by using 1,6-hexanediol as the diol because they exhibit a good adhesion property, in particular, to the lens layer formed of a solvent-free ionizing radiation curing resin, and further are easily industrially available.

The number-average molecular weight of the above polycarbonate diols is preferably 300 to 4000 as measured by gel permeation chromatography (GPC) in terms of polystyrene. In addition, the amount of these polycarbonate polyols added may be determined in the range of 40 to 80% by weight based on the weight of polyurethane resin (A).

As the polyisocyanate in the polyurethane resin (A) used in the present invention, there may be mentioned conventionally known aliphatic, alicyclic and aromatic polyisocyanates, etc.

Specific examples of the aliphatic polyisocyanate include dodecamethylene diisocyanate, 1,4-butane diisocyanate, hexamethylene diisocyanate, 2,2,4-trimethyl hexamethylene diisocyanate, 2-methyl pentane-1,5-diisocyanate and 3-methyl pentane-1,5-diisocyanate.

Specific examples of the alicyclic polyisocyanate include isophorone diisocyanate, hydrogenated xylylene diisocyanate, 4,4'-dicyclohexylmethane diisocyanate, 1,4-cyclohexane diisocyanate, methyl cyclohexylene diisocyanate, 1,3-bis(isocyanato-methyl)cyclohexane and 1,4-bis(isocyanato-methyl)cyclohexane.

Specific examples of the aromatic polyisocyanate include tolylene diisocyanate, 2,2'-diphenylmethane diisocyanate, 2,4'-diphenylmethane diisocyanate, 4,4'-diphenylmethane diisocyanate, 4,4'-dibenzyl diisocyanate, 1,5-naphthylene diisocyanate, xylylene diisocyanate, 1,3-phenylene diisocyanate and 1,4-phenylene diisocyanate.

These polyisocyanates may be used alone or in the form of a mixture of any two or more thereof.

Among the above polyisocyanates, the alicyclic polyisocyanates are preferred because they exhibit a good adhesion property, in particular, to a lens layer formed of a solvent-free ionizing radiation curing resin, etc. The reason therefor is considered as follows, although not clearly determined. That is, the polyurethane resin is required to have a certain degree of softness for attaining a good adhesion to the lens layer. On the contrary, the polyurethane resin is required to have a certain degree of hardness for improving a wet heat resistance thereof. Therefore, it is suggested that the alicyclic polyisocyanate having an property which is intermediate between these properties can exhibit a good balance between the softness and hardness of the resulting polyurethane resin.

In the polyurethane resin (A) used in the present invention, in order to enhance an adhesion property of the resulting coating layer, the above component a1) (polycarbonate polyol) may be allowed to coexist with a polyoxyalkylene glycol as the polyol component. Specific examples of the polyoxyalkylene glycol to be incorporated in the polyurethane resin (A) include polyoxyethylene glycol, polyoxypropylene glycol, polyoxybutanediol, and polyoxyethylene glycol-polyoxypropylene glycol block copolymers.

The number-average molecular weight of the polyoxyalkylene glycols is preferably 200 to 3000 as measured by gel permeation chromatography (GPC) in terms of polyoxyethylene glycol. In addition, the amount of these polyoxyalkylene glycols added may be determined in the range of 3 to 10% by weight based on the weight of polyurethane resin (A).

In the present invention, it is required that the polyurethane resin (A) comprises the component a2) (which is a compound obtained by quaternarizing a tertiary amino group of a chain extender having the tertiary amino group in a molecule thereof) as a constitutional unit of the resin. The polyurethane resin (A) comprising the component a2) has a self-dispersibility, and can be allowed to be present in the form of a stable dispersion in a medium comprising water as a main component, in particular, without adding any emulsifier thereto. In addition, the polyurethane resin (A) is a cationic polymer similar to the below-mentioned cationic polymer antistatic agent (B). Therefore, even when mixing the polyurethane resin (A) with the cationic polymer antistatic agent (B), there is caused no ionic coagulation between molecules of both the components.

Examples of the chain extender contained in the polyurethane resin (A) used in the present invention include N-alkyl dialkanol amines such as N-ethyl diethanol amine; N-alkyl diaminoalkyl amines such as N-methyl diaminoethyl amine and N-ethyl diaminoethyl amine; and triethanol amine. These chain extenders having a tertiary amino group may be used alone or in combination of any two or more thereof. The amount of the chain extender added may be usually determined in the range of 5 to 15% by weight based on the weight of the polyurethane resin (A).

In the present invention, it is required that the tertiary amino group of the chain extender having a tertiary amino group which is introduced into the polyurethane resin is neutralized with an acid, or the tertiary amino group is quaternarized with a quaternarizing agent to form a cationic polyurethane resin comprising a quaternarized compound. Examples of the acid used for neutralizing the tertiary amino group of the chain extender include organic acids such as formic acid, acetic acid, propionic acid, butyric acid, lactic acid, malic acid, malonic acid and adipic acid; and inorganic acids such as hydrochloric acid, phosphoric acid and nitric acid. These acids may be used alone or in combination of any two or more thereof. Examples of the quaternarizing agent used for quaternarizing the tertiary amino group of the chain extender include benzyl chloride; alkyl halides such as methyl chloride; and sulfuric acid esters such as dimethyl sulfate and diethyl sulfate. These quaternarizing agents may be used alone or in combination of any two or more thereof.

The polyurethane resin (A) used in the present invention may be produced by mixing and reacting the polyisocyanate, the polycarbonate polyol and the chain extender having a tertiary amino group with each other, and then quaternarizing the tertiary amino group contained in the resulting reaction product. However, the previously quaternarized compound may be reacted as the chain extender.

It is required that the biaxially stretched film of the present invention is provided on at least one surface thereof with a coating layer comprising the cationic polymer antistatic agent (B).

As described above, since the polyurethane resin (A) and the cationic polymer antistatic agent (B) both are a cationic polymer, a coating agent prepared by mixing both the components is free from ionic coagulation between molecules thereof. In addition, the antistatic agent in the form of a cationic polymer readily allows the resulting coating layer to exhibit a high antistatic performance and a good transparency after being stretched, as compared to anionic or nonionic antistatic agents. Further, the cationic polymer antistatic agent is also free from a transfer phenomenon which tends to be often caused when using a low-molecular weight antistatic agent.

The cationic polymer antistatic agent (B) suitably used in the present invention is in the form of a polymer comprising a unit having a quaternarized nitrogen as a repeating unit thereof. In particular, the cationic polymer antistatic agent (B) is preferably in the form of a cationic polymer comprising a unit having a pyrrolidinium ring in a main chain thereof which is represented by the following formula (I) or (II) as a main repeating unit in view of attaining an excellent antistatic performance.

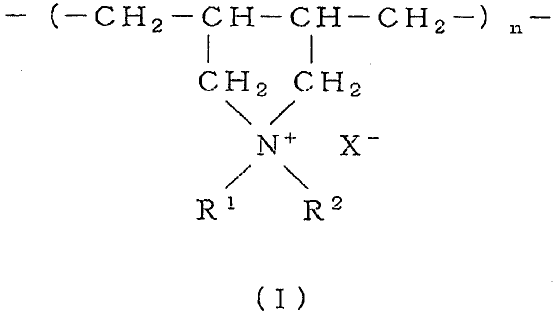

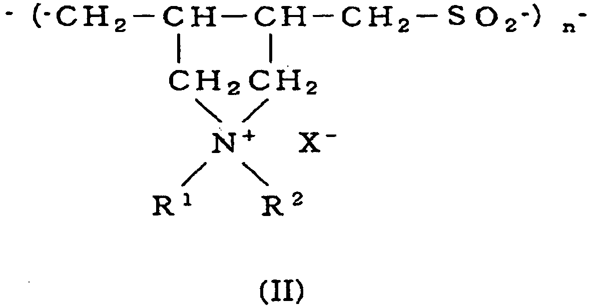

In the structure represented by the formula (I) or (II), R¹ and R² are each preferably an alkyl group having 1 to 4 carbon atoms or hydrogen, and these groups may be the same or different from each other. Also, the alkyl group as R¹ and R² may be substituted with a hydroxyl group, an amide group, an amino group or an ether group. Further, R¹ and R² may be chemically bonded to each other to form a ring structure. In addition, X⁻ in the formula (I) or (II) may be any of a halogen ion, a nitric acid ion, a methanesulfonic acid ion, an ethanesulfonic acid ion, a monomethylsulfuric acid ion, a monoethylsulfuric acid ion, a trifluoroacetic acid ion and a trichloroacetic acid ion.

Among the cationic polymers comprising the unit having a pyrrolidinium ring in a main chain thereof as a main repeating unit, those cationic polymers of the formula (I) in which X⁻ is a chlorine ion are especially preferred because they are excellent in antistatic performance, and at the same time can exhibit a less humidity dependency of the antistatic performance and therefore a less deterioration in antistatic performance even under a low humidity condition. Furthermore, even when no halogen ion is usable in the antistatic easy-bonding layer, the methanesulfonic acid ion or the monomethylsulfuric acid ion may be used instead of the chlorine ion, so that the antistatic performance close to that using the chlorine ion can be attained.

The polymer having the unit of the formula (I) as a repeating unit may be produced by polymerizing a diallyl ammonium salt as a monomer represented by the following formula (III) in a medium comprising water as a main component while subjecting the monomer to ring-closing reaction by a radical polymerization method. Also, the polymer having the unit of the formula (II) as a repeating unit may be produced by subjecting the monomer of the formula (III) to cyclic polymerization reaction in a reaction system using sulfur dioxide as a reaction medium.

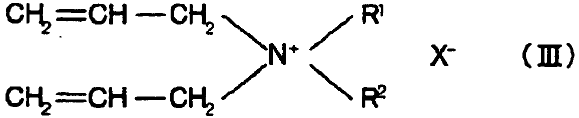

The polymer having the unit of the formula (I) or (II) as a repeating unit is preferably in the form of a homopolymer constituted from a single unit because of a higher antistatic performance thereof. However, as described hereinafter, in the case where a coating solution comprising the cationic polymer is applied onto a polyester film and then the thus coated polyester film is stretched, in order to improve a transparency of the coating layer, 0.1 to 50 mol% of the unit represented by the formula(I) or (II) may be substituted with the other copolymerizable component.

The monomer component used as the copolymerizable component may be one or more compounds selected from those compounds having a carbon-to-carbon unsaturated bond which is copolymerizable with the diallyl ammonium salt of the formula (III).

Specific examples of the above compounds include acrylic acid and salts thereof, methacrylic acid and salts thereof, methyl (meth)acrylate, ethyl (meth)acrylate, propyl (meth)acrylate, butyl (meth)acrylate, (meth)acrylamide, N-methylol (meth)acrylamide, N-methyl (meth)acrylamide, N,N-dimethyl (meth)acrylamide, maleic acid and salts thereof or maleic anhydride, fumaric acid and salts thereof or fumaric anhydride, monoallyl amines and quaternarized products thereof, acrylonitrile, vinyl acetate, styrene, vinyl chloride, vinylidene chloride, hydroxyethyl (meth)acrylate, hydroxypropyl (meth)acrylate, dihydroxypropyl (meth)acrylate, glycidyl (meth)acrylate, (meth)acryloyloxyethyl dialkyl amines and quaternarized products thereof, (meth)acryloyloxypropyl dialkyl amines and quaternarized products thereof, (meth)acryloylaminoethyl dialkyl amines and quaternarized products thereof, and (meth)acryloylaminopropyl dialkyl amines and quaternarized products thereof, although not particularly limited thereto.

As the cationic polymer antistatic agent (B) in the coating layer used in the present invention, a cationic polymer comprising, for example, a unit represented by the following formula (IV) or (V) as a repeating unit may also be used in place of the above cationic polymer comprising a unit having a pyrrolidinium ring in a main chain thereof which is represented by the above formula (I) or (II) as a repeating unit.

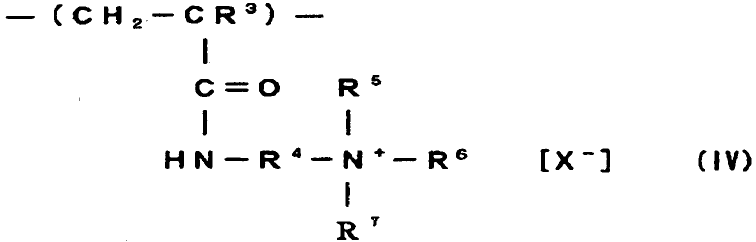

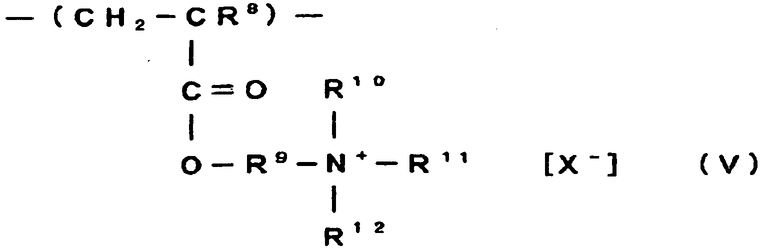

In the structure of the formula (IV) or (V), R³ and R⁸ are each preferably hydrogen or a methyl group; R⁴ and R⁹ are each preferably an alkyl group having 2 to 6 carbon atoms; R⁵, R⁶, R⁷, R¹⁰, R¹¹ and R¹² are each a methyl group, a hydroxyethyl group or hydrogen, and these groups may be respectively the same or different from each other. In addition, X⁻ in the formula (IV) or (V) is any of a halogen ion, a nitric acid ion, a methanesulfonic acid ion, an ethanesulfonic acid ion, a monomethylsulfuric acid ion, a monethylsulfuric acid ion, a trifluoroacetic acid ion and a trichloroacetic acid ion.

The cationic polymer comprising the unit represented by the formula (IV) or (V) as a repeating unit may be produced, for example, by subjecting an acrylic acid monomer or a methacrylic acid monomer corresponding to the respective units to radical polymerization in a medium comprising water as a main component, although not particularly limited thereto.

The average molecular weight (number-average molecular weight) of the cationic polymer used in the present invention is usually in the range of 1000 to 500000 and preferably 5000 to 100000. When the average molecular weight of the cationic polymer is less than 1000, the resulting film tends to suffer from transfer of the cationic polymer to a surface portion of the film overlapped on the other portion thereof when the film is wounded up, or tends to suffer from blocking, etc. On the other hand, when the average molecular weight of the cationic polymer is more than 500000, a coating solution comprising such a cationic polymer tends to have an excessively high viscosity so that it may be difficult to uniformly coat the surface of the film with such a coating solution.

The coating layer of the biaxially stretched polyester film of the present invention is required to comprise the above polyurethane resin (A) and cationic polymer antistatic agent (B). The weight ratio (A)/(B) is in the range of 40/60 to 90/10 and preferably 50/50 to 80/20. When the weight ratio (A)/(B) is less than 40/60, the resulting coating layer tends to be insufficient in adhesion to the lens layer, etc., although it exhibit a sufficient antistatic effect. On the other hand, when the weight ratio (A)/(B) is more than 90/10, the resulting coating layer tends to be insufficient in antistatic effect, although it exhibit a sufficient adhesion property.

Also, the total weight of the polyurethane resin (A) and the cationic polymer antistatic agent (B) in the coating layer is usually not less than 50% by weight and preferably not less than 70% by weight, and may be 100% by weight in maximum.

The coating layer formed in the biaxially stretched polyester film of the present invention may also comprise a crosslinking agent in addition to the above polyurethane resin (A) and cationic polymer antistatic agent (B) for the purpose of enhancing a heat resistance, a moisture resistance and an anti-blocking property of the resulting coating film. The crosslinking agent preferably comprises at least one compound selected from the group consisting of methylolated or alkoxymethylolated melamine-based compounds and benzoguanamine-based compounds, urea-based compounds, acrylamide-based compounds, epoxy-based compounds, isocyanate-based compounds, carbodiimide-based compounds, oxazoline-based compounds, silane coupling agent-based compounds and titanium coupling agent-based compounds. The amount of the crosslinking agent added is usually 1 to 50% by weight and preferably 3 to 40% by weight based on a total weight of the coating layer.

In the biaxially stretched polyester film of the present invention, for the purpose of impart a good slip property to the surface of the coating layer and enhancing an anti-blocking property thereof, inorganic or organic fine particles may be added to the coating layer. The fine particles are preferably at least one kind of fine particles selected from the group consisting of fine particles of silica, alumina, titanium oxide, a silica-alumina composite material, a silica-titanium oxide composite material, crosslinked acrylic resins, crosslinked polystyrene resins, etc., and conductive fine particles such as tin oxide fine particles, indium-tin composite oxide fine particles and antimony-tin composite oxide fine particles. The average particle diameter of the fine particles added is preferably 5 to 200 nm, and the amount of the fine particles added to the coating layer is preferably not more than 10% by weight based on a total weight of the coating layer.

In the biaxially stretched polyester film of the present invention, a surfactant may be added to the coating layer. As the surfactant, there may be suitably used nonionic surfactants such as acetylene glycol derivatives substituted with an addition polymer of an alkyleneoxide for the purpose of improving a wettability of the coating solution. In addition, for the purpose of maintaining a good transparency of the coating layer during the step of stretching the coating layer together with the base film, there may also be suitably used polyalkyleneoxide adducts of glycerol, polyalkyleneoxide adducts of polyglycerol, etc.

In addition to the above components, the coating layer may also comprise the other components, if required. Examples of the other components include a defoaming agent, a thickener, an antioxidant, an ultraviolet absorber, a foaming agent, a dye and a pigment. These additives may be used alone or in combination of any two or more thereof, if required.

In the biaxially stretched polyester film of the present invention, the coating layer may also comprise, in addition to the polyester resin (A) as an essential component, the other binder resin such as, for example, polyester resins, acrylic resins and polyurethane resins other than the resin (A), if required, unless the aimed effects of the present invention are adversely affected.

In the biaxially stretched film according to the present invention, the coating amount of the coating layer is preferably in the range of 0.005 to 1.0 g/m² and more preferably 0.01 to 0.5 g/m² as measured with respect to a dried film finally obtained after being dried and solidified or after being subjected to biaxial stretching, heat-setting, etc. when the coating amount of the coating layer is less than 0.005 g/m², the resulting coating layer tends to be insufficient in antistatic performance and adhesion property. When the coating amount of the coating layer is more than 1.0 g/m², the antistatic performance and adhesion property of the coating layer is already saturated, and on the contrary, the resulting coating layer rather tends to suffer from problems such as occurrence of blocking.

In the biaxially stretched film according to the present invention, the coating layer is usually formed by applying a coating solution using water as a main medium onto a polyester film. Although the polyester film to be coated with the coating solution may be previously biaxially stretched, the coating layer is preferably formed by a so-called in-line coating method in which after applying the coating solution onto the polyester film, the thus coated polyester film is stretched in at least one direction thereof and then thermally fixed. In the in-line coating method, since the polyester film and the coating layer are thermally fixed at a temperature as high as usually not lower than 200°C at the same time, so that the crosslinking reaction in the coating layer is allowed to proceed sufficiently, and the adhesion between the coating layer and the polyester film can be further enhanced.

In addition, for the purpose of enhancing a storage stability of the coating solution or improving a coatability of the coating solution and properties of the resulting coating film, in addition to water, one or more kinds of organic solvents having a good compatibility with water may be added to the coating solution in an amount of usually not more than 10% by weight. Examples of the organic solvents include alcohols such as ethanol, isopropanol, ethylene glycol and glycerol; ethers such as ethyl cellosolve, t-butyl cellosolve, propylene glycol monomethyl ether and tetrahydrofuran; ketones such as acetone and methyl ethyl ketone; amines such as dimethylethanol amine and trimethanol amine; and amides such as N-methyl pyrrolidone, dimethyl formamide and dimethyl acetamide.

As the method of applying the coating solution onto the polyester film, there may be used those coating techniques described, for example, in Yuji HARAZAKI, "Coating Methods", Maki-shoten, 1979. Specific examples of the coating method include those methods using an air doctor coater, a blade coater, a rod coater, a knife coater, a squeeze coater, an impregnation coater, a reverse roll coater, a transfer roll coater, a gravure coater, a kiss roll coater, a cast coater, a spray coater, a curtain coater, a calender coater, an extrusion coater, a bar coater, etc.

Meanwhile, before coated with the coating solution, the polyester film may be subjected to chemical treatments, corona discharge treatment, plasma treatment, etc., in order to enhance a coatability and an adhesion property of the coating solution to the film.

In the present invention, the surface resistivity value of the above coating layer is usually not more than 1 x 10¹² Ω, preferably not more than 1 x 10¹¹ Ω and more preferably not more than 1 x 10¹⁰ Ω. The lower limit of the surface resistivity value of the coating layer is not particularly limited, and is usually 1 x 10⁸ Ω. When the surface resistivity value of the coating layer is more than 1 x 10¹² Ω, the functional layers further laminated on the coating layer such as the lens layer and the light diffusion layer may fail to effectively exhibit an antistatic performance on the surface thereof.

On the surface of the coating layer of the biaxially stretched polyester film according to the present invention, there may be suitably formed known optical functional layers such as a light diffusion layer and a lens layer. In this case, the biaxially stretched polyester film may be suitably used as a base film and may be provided on each surface thereof with the coating layer used in the present invention. The base film may be provided on both surfaces thereof with the lens layer or the light diffusion layer, or may be provided on one surface thereof with the light diffusion layer and on the other surface thereof with the lens layer. Furthermore, the biaxially stretched film may be provided on one surface thereof with the coating layer according to the present invention and on the other surface thereof with the other coating layer.

In addition to the above functional layers, the coating layer of the biaxially stretched film according to the present invention may also be provided thereon with the other optical functional layer such as an infrared absorption layer, a synthetic resin-containing functional layer such as a hard coat layer, a photosensitive layer and an adhesive layer, and a vapor deposited film such as a metal oxide layer.

### EFFECTS OF THE INVENTION

The biaxially stretched film according to the present invention can exhibit both of an adhesion property and an antistatic property with a high level. Therefore, for example, when using the biaxially stretched film as a base film for an optical member such as a light diffusion plate and a lens sheet, the coating layer formed thereon can exhibit not only an excellent antistatic property, but also a sufficient adhesion property to a solvent-free ionizing radiation curing resin used in the lens layer. In addition, the surface resistivity value of the light diffusion layer or the lens layer formed on the antistatic easy-bonding layer becomes low, and occurrence of static electricity can be reduced even when a protective EVA sheet attached thereon is peeled off therefrom. Therefore, the present invention has a high industrial value.

### PREFERRED EMBODIMENTS FOR CARRYING OUT THE INVENTION

The constructions and effects of the present invention are described in more detail below by Examples. However, these Examples are only illustrative and not intended to limit the present invention thereto, and various other modifications and changes are possible unless departing from the subject matters of the present invention. Meanwhile, various properties and characteristics used in Examples and Comparative Examples were measured or defined as follows. In addition, the term "part(s)" used herein means "part(s) by weight" unless otherwise specified.

### (1) Measurement of an intrinsic viscosity of polyester:

One gram of a polyester was accurately weighed, and mixed with and dissolved in 100 mL of a mixed solvent comprising phenol and tetrachloroethane at a weight ratio of 50:50, and a viscosity of the resultant solution was measured at 30°C.

### (2) Average particle diameter (d₅₀: µm) of a filler (fine particles) used in a polyester film:

The particle diameter corresponding to 50% cumulative value (based on weight) in an equivalent sphere distribution of the fine particles was measured by using a centrifugal precipitation type particle size distribution measuring apparatus "SA-CP3 Model" manufactured by Shimadzu Seisakusho Co., Ltd., and the thus measured particle diameter was determined as an average particle diameter of the fine particles.

### (3) Average particle diameter (nm) of fine particles used in a coating layer:

A dispersion of the fine particles was subjected to measurement for a 50% average particle diameter as a number-average particle diameter of the fine particle using "MICROTRACK UPA" manufactured by Nikkiso Co., Ltd. The thus measured value was determined as a average particle diameter (nm) of the fine particles.

### (4) Surface resistivity value (Ω):

Using a high-resistance meter "HP4339B" and a measuring electrode "HP16008B" both manufactured by Hewlett Packard Japan, Ltd., the surface resistivity value (Ω) of the coating layer after applying a voltage of 100 V thereto for 1 min was measured in an atmosphere of 23°C and 50% RH.

### (5) Film haze (%):

The haze (%) of the film was measured using a haze measuring device "HAZE METER HM-150" manufactured by Murakami Color Research Laboratory Co., Ltd., according to JIS K7136.

### (6) Formation of a light diffusion layer:

A coating solution for forming a light diffusion layer having the following composition was applied onto a surface of one of the coating layers formed in the biaxially stretched polyester film, by a reverse gravure coating method such that the coating amount of the coating solution on the surface of the film was 7 g/m² after being dried and cured. Thereafter, the resulting coating layer was dried and cured at 100°C for 2 min, thereby forming a light diffusion layer.

### <Composition of coating solution for forming a light diffusion layer>

| | |
|---|---|
| Acrylic resin ("TF-8" (tradename) produced by Mitsubishi Rayon Co., Ltd.) | 20 parts by weight |
| Methyl ethyl ketone | 40 parts by weight |
| Toluene | 40 parts by weight |
| Silicone resin fine particles ("Tospearl (registered trademark) 130" (tradename) produced by GE Toshiba Silicone Co., Ltd.) | 5.4 parts by weight |

### (7) Adhesion property to a light diffusion layer under ordinary conditions (23°C; 50% RH):

The light diffusion layer obtained in the above (6) was subjected to cross-cutting until the cut portion reached the surface of the underlying base film to form cross-cuts (25 cross-cuts of 2 mm² square) thereon. A 18 mm-wide tape ("Cellotape (registered trademark) CT-18" produced by Nichiban Co., Ltd.) was attached onto the light diffusion layer, and then rapidly peeled off therefrom at a peel angle of 180°. Thereafter, the surface of the light diffusion layer from which the tape was peeled off, was observed to count the number of the cross-cuts peeled (per 25 cross-cuts). The results of the observation were classified into the following ranks. Meanwhile, ⊚ and ○ are acceptable upon practical use.
⊚: Number of cross-cuts peeled was 0
○: Number of cross-cuts peeled was not less than 1 and less than 5
Δ: Number of cross-cuts peeled was not less than 5 and less than 10
×: Number of cross-cuts peeled was not less than 10

### (8) Wet heat-resistant adhesion property to a light diffusion layer (60°C; 95% RH):

The polyester film having the light diffusion layer as produced in the above (6) was treated under the environmental conditions of 60°C and 95% RH for 1000 hr. The thus treated polyester film was allowed to stand under ordinary conditions (23°C; 50% RH) for 24 hr, and then evaluated for an adhesion property thereof under the ordinary conditions by the same method as used in the above (7) (⊚ and ○ are acceptable upon practical use).

### (9) Formation of a lens layer:

The polyester film prepared in the above (6) which was provided on one surface thereof with the light diffusion layer was introduced between a metal mold roll for forming a lens layer on which a reverse shape of respective prism-shaped lenses (pitch: 50 µm; apex angle: 65°) was formed, and a rubber roll opposed to the metal mold roll such that the coating layer formed on the surface of the polyester film which was opposed to its surface provided with the light diffusion layer was brought into contact with the metal mold roll, and then nipped therebetween. Then, the following solvent-free ultraviolet curing resin composition was supplied to a portion where the metal mold roll and the coating layer were contacted with each other, and the metal mold roll was rotated. Thus, the lens layer was formed on the surface of one of the coating layers of the polyester film, and at the same time, the thus obtained lens layer was irradiated with ultraviolet rays from the side of the polyester film opposed to the lens layer (on the side of the light diffusion layer) using two high-pressure mercury lamps (160 W/cm) from the position spaced apart by 10 cm therefrom (in this case, an amount of ultraviolet rays irradiated was 500 mJ/cm²). After polymerizing and curing the resin forming the lens layer by irradiation with ultraviolet rays, the resulting film was released from the metal mold roll to thereby form the lens layer.

### <Composition of a coating solution for forming a lens layer>

| | |
|---|---|
| Phenoxyethyl acrylate ("BISCOAT #192" (tradename) produced by Osaka Organic Chemical Industry Ltd.) | 50 parts by weight |
| Bisphenol A-diepoxy-acrylate ("Epoxyester 3000A" (tradename) produced by Kyoeisha Yushi Kagaku Kogyo Co., Ltd.) | 50 parts by weight |
| 2-Hydroxy-2-methyl-1-phenyl propan-1-one ("DAROCUR" (registered trademark) 1173" produced by Ciba Geigy Corp.) | 1.5 parts by weight |

### (10) Adhesion property to a lens layer under ordinary conditions (23°C; 50% RH):

The lens layer obtained in the above (9) was subjected to cross-cutting until the cut portion reached the surface of the underlying base film to form cross-cuts (25 cross-cuts of 2 mm² square) thereon. A 18 mm-wide tape ("Cellotape (registered trademark) CT-18" produced by Nichiban Co., Ltd.) was attached onto the lens layer, and then rapidly peeled off therefrom at a peel angle of 180°. Thereafter, the surface of the lens layer from which the tape was peeled off, was observed to count the number of the cross-cuts peeled (per 25 cross-cuts). The results of the observation were classified into the following ranks. Meanwhile, ⊚ and ○ are acceptable upon practical use.
⊚: Number of cross-cuts peeled was 0
○: Number of cross-cuts peeled was not less than 1 and less than 5
Δ: Number of cross-cuts peeled was not less than 5 and less than 10
×: Number of cross-cuts peeled was not less than 10

### (11) Wet heat-resistant adhesion property to a lens layer (60°C; 95% RH):

The polyester film having the lens layer as produced in the above (9) was treated under the environmental conditions of 60°C and 95% RH for 1000 hr. The thus treated polyester film was allowed to stand under ordinary conditions (23°C; 50% RH) for 24 hr, and then evaluated for an adhesion property thereof under the ordinary conditions by the same method as used in the above (10) (⊚, ○ and Δ are acceptable upon practical use).

### (12) Peel static electrification test for EVA:

An EVA sheet was compression-bonded onto the surface of each of the light diffusion layer and the lens layer to protect these layers, and a rubber roller having a weight of 1.88 kg was reciprocatively rolled over the thus attached EVA sheet by 10 strokes under the environmental, conditions of 23°C and 50% RH. Thereafter, the EVA sheet over which the rubber roller had been reciprocatively rolled was peeled off at a peel speed of 500 mm/min. The light diffusion layer or the lens layer immediately after peeling off the EVA sheet therefrom was approached to a desk on which a small number of pieces (diameter: about 5 mm) of a copying paper perforated by a punch were scattered until reaching the position spaced apart by 3 cm from the disk to observe whether or not the pieces of the copying paper were attracted to the layer, to thereby evaluate an intensity of peel static electrification of the layer according to the following ratings.
○: No pieces of the copying paper were attracted.
Δ very small number of pieces of the copying paper were attracted.
×: Many pieces of the copying paper were attracted.

The polyesters used in the following Examples and Comparative Examples were prepared by the following methods.

### <Method for producing polyester (1)>

A reaction vessel was charged with 100 parts by weight of dimethyl terephthalate and 60 parts by weight of ethylene glycol as starting materials, and further with 0.09 part by weight of magnesium acetate tetrahydrate as a catalyst. After the reaction was initiated by setting a reaction initiation temperature to 150°C, the reaction temperature was gradually raised while distilling off methanol therefrom, and allowed to reach 230°C after 3 hr. After 4 hr, the transesterification reaction was substantially terminated. The obtained reaction mixture was mixed with 0.04 part of ethyl acid phosphate, and then an ethylene glycol solution of germanium oxide was added thereto in an amount of 100 ppm in terms of metallic germanium in the polymer to thereby subject the reaction mixture to polycondensation reaction for 4 hr. That is, in the above reaction, the reaction temperature was gradually raised from 230°C and finally allowed to reach 280°C. On the other hand, the reaction pressure was gradually dropped from normal pressures and finally allowed to reach 0.3 mmHg. After initiation of the reaction, the change in agitation power in the reaction vessel was observed, and the reaction was terminated at the time at which the agitation power reached the value corresponding to an intrinsic viscosity of 0.65. The resulting polymer was withdrawn from the reaction vessel under application of a nitrogen pressure. As a result, it was confirmed that the thus obtained polyester (1) had an intrinsic viscosity of 0.65.

### <Method for producing polyester (2)>

The polyester (1) was previously subjected to preliminary crystallization at 160°C, and then subjected to solid state polymerization in a nitrogen atmosphere at 220°C, thereby obtaining a polyester (2) having an intrinsic viscosity of 0.75.

### <Method for producing polyester (3)>

The same procedure as defined above in the method for producing the polyester (1) was conducted except that after adding 0.04 part of ethyl acid phosphate, 0.2 part of amorphous silica particles having an average particle diameter of 2.2 µm in the form of a dispersion in ethylene glycol, and an ethylene glycol solution of germanium oxide in an amount of 100 ppm in terms of metallic germanium in the polymer, were added to the reaction mixture, and the polycondensation reaction was terminated at the time at which the agitation power reached the value corresponding to an intrinsic viscosity of 0.65, thereby obtaining a polyester (3). As a result, it was confirmed that the thus obtained polyester (3) had an intrinsic viscosity of 0.65.

### Examples 1 to 6 and Comparative Examples 1 to 4:

A mixed raw material prepared by mixing the polyesters (2) and (3) in amounts of 90% and 10%, respectively, was used as a raw material for outermost layers (surface layers), and the polyester (1) was used as a raw material for an intermediate layer. The respective raw materials were fed to two extruders and melted therein at 285°C, and then co-extruded on a cooling roll adjusted to 40°C and cooled and solidified thereon to form a 2-kind/3-layer structure (surface layer/intermediate layer/surface layer), thereby obtaining an unstretched sheet. Next, using a difference in peripheral speed between rolls, the unstretched sheet was stretched in a longitudinal direction thereof at a stretch ratio of 3.3 times at a film temperature of 85°C. Both the surfaces of the thus longitudinally stretched film were coated with respective aqueous coating solutions as shown in the following Tables by a bar coating method. Thereafter, the thus coated stretched film was introduced into a tenter in which the film was subjected to drying and preheating at 120°C and then stretched in a width direction thereof at stretch ratio of 3.8 times, and further subjected to heat treatment at 220°C. Then, the resulting biaxially stretched film was subjected to 4% relaxation in a cooling zone at 180°C in the width direction thereof, thereby obtaining a laminated polyester film provided on front and rear surfaces thereof with respective coating layers having different compositions from each other which had a thickness of 188 µm (surface layers: 4 µm for each; intermediate layer: 180 µm).

Next, the surface of one of the coating layers formed on the polyester film was coated with a light diffusion layer. Then, the surface of the other coating layer of the polyester film which was opposed to the surface provided with the light diffusion layer was coated with a lens layer. Then, the front and rear surfaces of the polyester film on which the light diffusion layer and the lens layer were respectively formed, were overlapped with respective EVA sheets (thickness: about 50 µm) such that the polyester film was sandwiched between the two EVA sheets. The resulting laminated sheet was compression-bonded together by using a nip roll such that the EVA sheets were respectively attached onto both of the light diffusion layer and the lens layer.

The compositions of the coating layers used in the respective films as well as the evaluation results of the biaxially stretched polyester films having the coating layers are shown in Table 1 below.

### Comparative Example 5:

The same procedure as defined in Example 1 was conducted except that the coating solution was prepared by using an anionic aqueous polyurethane having polycarbonate polyol structure ("TAKELAC W-6010" (tradename) produced by Mitsui Chemicals Polyurethane Co., Ltd.) in place of the polyurethane resin A1. As a result, the coating solution was immediately precipitated and was unable to be applied onto the film.

The compounds constituting the respective coating layers as shown in Table 1 below are as follows.

### ·Polyurethane A1:

A reaction vessel was charged with 76.7 parts by weight of a polycarbonate polyol produced by reacting 1,6-hexanediol and diethyl carbonate (number-average molecular weight as measured GPC: about 1000), 6.4 parts by weight of polyethylene glycol ("PEG 600" (tradename) produced by Dai-ichi Kogyo Seiyaku Co., Ltd.; molecular weight: 600), 2.0 parts by weight of trimethylol propane, 19.9 parts by weight of N-methyl-N,N-diethanol amine, 84.0 parts by weight of 4,4'-diphenylmethane diisocyanate and 87 parts by weight of MEK, and the contents of the reaction vessel were reacted with each other at a temperature of 70 to 75°C to obtain a urethane prepolymer. The thus obtained urethane prepolymer was mixed and reacted with 16.8 parts by weight of dimethylsulfuric acid at a temperature of 50 to 60°C, thereby obtaining a cationic urethane polymer. After the cationic urethane polymer was emulsified by adding 623 parts by weight of water thereto, MEK was recovered from the resulting emulsion, thereby obtaining a water dispersion of the polyurethane resin.

### ·Polyurethane A2:

A reaction vessel was charged with 76.7 parts by weight of a polycarbonate polyol produced by reacting 1,6-hexanediol and diethyl carbonate (number-average molecular weight as measured GPC: about 1000), 6.4 parts by weight of polyethylene glycol ("PEG 600" (tradename) produced by Dai-ichi Kogyo Seiyaku Co., Ltd.; molecular weight: 600), 2.0 parts by weight of trimethylol propane, 19.9 parts by weight of N-methyl-N,N-diethanol amine, 57.7 parts by weight of hexamethylene diisocyanate and 87 parts by weight of MEK, and the contents of the reaction vessel were reacted with each other at a temperature of 70 to 75°C to obtain a urethane prepolymer. The thus obtained urethane prepolymer was mixed and reacted with 16.8 parts by weight of dimethylsulfuric acid at a temperature of 50 to 60°C, thereby obtaining a cationic urethane polymer. After the cationic urethane polymer was emulsified by adding 623 parts by weight of water thereto, MEK was recovered from the resulting emulsion, thereby obtaining a water dispersion of the polyurethane resin.

### ·Polyurethane A3:

A reaction vessel was charged with 78.0 parts by weight of a polycarbonate polyol produced by reacting 1,6-hexanediol and diethyl carbonate (number-average molecular weight as measured GPC: about 1000), 4.6 parts by weight of polyethylene glycol ("PEG 600" (tradename) produced by Dai-ichi Kogyo Seiyaku Co., Ltd.; molecular weight: 600), 1.9 parts by weight of trimethylol propane, 9.1 parts by weight of N-methyl-N,N-diethanol amine, 49.0 parts by weight of isophorone diisocyanate and 70 parts by weight of MEK, and the contents of the reaction vessel were reacted with each other at a temperature of 70 to 75°C to obtain a urethane prepolymer. The thus obtained urethane prepolymer was mixed and reacted with 9.2 parts by weight of dimethylsulfuric acid at a temperature of 50 to 60°C, thereby obtaining a cationic urethane polymer. After the cationic urethane polymer was emulsified by adding 353 parts by weight of water thereto, MEK was recovered from the resulting emulsion, thereby obtaining a water dispersion of the polyurethane resin.

### ·Polyurethane A4:

A reaction vessel was charged with 76.7 parts by weight of a polycarbonate polyol produced by reacting 1,6-hexanediol and diethyl carbonate (number-average molecular weight as measured GPC: about 1000), 6.4 parts by weight of polyethylene glycol ("PEG 600" (tradename) produced by Dai-ichi Kogyo Seiyaku Co., Ltd.; molecular weight: 600), 2.0 parts by weight of trimethylol propane, 19.9 parts by weight of N-methyl-N,N-diethanol amine, 86.7 parts by weight of 4,4'-dicyclohexylmethane diisocyanate and 87 parts by weight of MEK, and the contents of the reaction vessel were reacted with each other at a temperature of 70 to 75°C to obtain a urethane prepolymer. The thus obtained urethane prepolymer was mixed and reacted with 16.8 parts by weight of dimethylsulfuric acid at a temperature of 50 to 60°C, thereby obtaining a cationic urethane polymer. After the cationic urethane polymer was emulsified by adding 623 parts by weight of water thereto, MEK was recovered from the resulting emulsion, thereby obtaining a water dispersion of the polyurethane resin.

### ·Polyurethane A5:

A reaction vessel was charged with 300 parts by weight of a polytetramethylene glycol ("PTMG 1000" (tradename) produced by Mitsubishi Chemical Corporation; molecular weight: 1000), 6.0 parts by weight of polyethylene glycol ("PEG 600" (tradename) produced by Dai-ichi Kogyo Seiyaku Co., Ltd.; molecular weight: 600), 2.5 parts by weight of trimethylol propane, 16.0 parts by weight of N-methyl-N,N-diethanol amine, 71.7 parts by weight of isophorone diisocyanate and 89 parts by weight of MEK, and the contents of the reaction vessel were reacted with each other at a temperature of 70 to 75°C to obtain a urethane prepolymer. The thus obtained urethane prepolymer was mixed and reacted with 13.4 parts by weight of dimethylsulfuric acid at a temperature of 50 to 60°C, thereby obtaining a cationic urethane polymer. After the cationic urethane polymer was emulsified by adding 457 parts by weight of water thereto, MEK was recovered from the resulting emulsion, thereby obtaining a water dispersion of the polyurethane resin.

### ·Acrylic binder Ac:

Aqueous acrylic resin ("NIKAZOL (registered trademark)" (tradename) produced by Nippon Carbide Industries Co., Inc.; acid value: 6 mgKOH/g)

### ·Cationic polymer antistatic agent B1:

Quaternary ammonium salt-containing cationic polymer using a diallyl dimethyl ammonium chloride (pyrrolidinium ring-containing polymer of the formula (I)); average molecular weight: about 30000)

### ·Cationic polymer antistatic agent B2:

Homopolymer of poly(trimethyl ammonium ethyl methacrylate) monomethyl sulfuric cid salt (cationic polymer of the formula (V))

### ·Crosslinking agent C1:

Aqueous solution of a crosslinking agent of a copolymer type comprising 2-isopropenyl-2-oxazoline and an acrylic monomer ("EPOCROSS (registered trademark) WS-500" (tradename) produced by Nippon Shokubai Co., Ltd.; oxazoline group content: 4.5 mmol/g)

### ·Crosslinking agent C2:

Methoxymethylol melamine ("HECKAMINE (registered trademark) J101" (tradename) produced by Dai-Nippon Ink Kagaku Kogyo Co., Ltd.; functional group (methoxymethylol group) content: 18 mmol/g)

### ·Fine particles D:

Colloidal silica fine particles (average particle diameter: 0.07 µm)

### ·Additive E:

Adduct of polyethyleneoxide to a skeleton of diglycerol (average molecular weight: 450)

**Table 1**

| Examples and Comparative Examples | Solid content of coating layer (weight ratio) (%) | Ratio (A)/(B) (*note) | Final coating amount (g/m²) | Film haze (%) | Surface resistivity of coating layer (Ω) |
|---|---|---|---|---|---|
| Example 1 | A1/B1/C1/D =42/28/24/6 | 60/40 | 0.04 | 1.3 | 6x10⁹ |
| Example 2 | A2/B1/C1/D =42/28/24/6 | 60/40 | 0.04 | 1.3 | 6x10⁹ |
| Example 3 | A3/B1/C1/D =42/28/24/6 | 60/40 | 0.04 | 1.3 | 6x10⁹ |
| Example 4 | A4/B1/C1/D =42/28/24/6 | 60/40 | 0.04 | 1.3 | 6x10⁹ |
| Example 5 | A4/B1/C1/D =28/42/24/6 | 40/60 | 0.04 | 1.3 | 3x10⁹ |
| Example 6 | A4/B1/C1/D =63/7/24/6 | 90/10 | 0.04 | 1.3 | 9x10¹¹ |
| Example 7 | A4/B2/C1/D =42/28/24/6 | 60/40 | 0.04 | 1.3 | 8x10¹¹ |
| Comparative Example 1 | A5/B1/C1/D =42/28/24/6 | 60/40 | 0.04 | 1.3 | 2x10¹⁰ |
| Comparative Example 2 | Ac/B1/C2/D/E =27/45/20/3/5 | 0/100 | 0.08 | 1.3 | 2x10⁹ |
| Comparative Example 3 | B1/C1/D =70/24/6 | 0/100 | 0.04 | 2.4 | 2x10⁸ |
| Comparative Example 4 | A4/C1/D =70/24/6 | 100/0 | 0.04 | 1.3 | 4x10¹³ |

| | | | | | |
|---|---|---|---|---|---|
| [0112] (*Note) The ratio (A)/(B) represents a ratio "polyurethane resin (A)/cationic polymer antistatic agent (B)" in the coating layer (weight ratio). | | | | | |

**Table 2**

| Examples and Comparative Examples | Adhesion property to light diffusion layer | | Adhesion property to lens layer | | Electrification upon peel of EVA | |
|---|---|---|---|---|---|---|
| | Ordinary | Wet heat | Ordinary | Wet heat | Light diffusion layer | Lens layer |
| Example 1 | ⊚ | ⊚ | ○ | Δ | ○ | ○ |
| Example 2 | ⊚ | ⊚ | ⊚ | Δ | ○ | ○ |
| Example 3 | ⊚ | ⊚ | ⊚ | ○ | ○ | ○ |
| Example 4 | ⊚ | ⊚ | ⊚ | ○ | ○ | ○ |
| Example 5 | ⊚ | ○ | ⊚ | Δ | ○ | ○ |
| Example 6 | ⊚ | ⊚ | ⊚ | ⊚ | Δ | Δ |
| Example 7 | ⊚ | ⊚ | ⊚ | ○ | Δ | Δ |
| Comparative Example 1 | ○ | Δ | Δ | × | ○ | ○ |
| Comparative Example 2 | ○ | Δ | ○ | × | ○ | ○ |
| Comparative Example 3 | × | × | × | × | - | - |
| Comparative Example 4 | ⊚ | ⊚ | ⊚ | ⊚ | × | × |

The biaxially stretched polyester films obtained in Examples 1 to 6 satisfied the requirements according to the present invention and, therefore, were excellent in adhesion property to the light diffusion layer and the lens layer under any of the ordinary conditions (23°C; 50% RH) and the wet heat conditions (60°C; 95% RH). In addition, the above biaxially stretched polyester films were substantially free from generation of electrostatic charge when peeling off a protective EVA sheet from the respective layers owing to a low surface resistivity of the coating layer. Among them, the biaxially stretched polyester films obtained in Examples 3 and 4 in which the polyurethane rein (A) in the coating layer was prepared using the alicyclic polyisocyanate were excellent in wet heat-resistant adhesion property to the lens layer as compared to those obtained in Examples 1 and 2 in which the other polyisocyanate was used. On the other hand, the biaxially stretched polyester film obtained in Comparative Example 1 in which the polyurethane resin comprising no polycarbonate polyol was used to form the coating layer, was insufficient in adhesion property to the light diffusion layer or the lens layer, in particular, under wet heat conditions. The biaxially stretched polyester film obtained in Comparative Example 2 in which the coating layer comprised no polyurethane resin (A) of the present invention, was also insufficient in adhesion property to the light diffusion layer or the lens layer, in particular, under wet heat conditions. The biaxially stretched polyester film obtained in Comparative Example 3 in which no polyurethane resin (A) was present in the coating layer, failed to exhibit an adhesion property to the light diffusion layer or the lens layer. Also, the biaxially stretched polyester film obtained in Comparative Example 4 in which the coating layer comprised no cationic polymer antistatic agent (B), was insufficient in antistatic performance. The biaxially stretched polyester film obtained in Comparative Example 5 in which the polyurethane resin used therein comprised no compound formed by quaternarizing a tertiary amino group of a chain extender having the tertiary amino group in a molecule thereof, suffered from ionic coagulation and was precipitated when mixed with the cationic polymer antistatic agent.

### INDUSTRIAL APPLICABILITY

The biaxially stretched polyester film according to the present invention can be suitably used, for example, in the application in which both excellent adhesion property and antistatic property are required.

## Claims

1. A biaxially stretched polyester film comprising a coating layer which comprises components (A) and (B):
(A) a polyurethane resin comprising as constitutional units
(a1) a polycarbonate polyol and
(a2) a compound formed by quaternarizing a tertiary amino group of a chain extender having the tertiary amino group in a molecule thereof, and
(B) a cationic polymer antistatic agent in the form of a polymer comprising a unit having a quaternized nitrogen as a repeating unit thereof,
wherein the coating layer comprises components (A) and (B) in a weight ratio in the range of 40/60 to 90/10,
which coating layer is formed on at least one surface of the film.

2. A biaxially stretched polyester film according to claim 1, wherein the cationic polymer antistatic agent (B) is in the form of a cationic polymer comprising a unit having a pyrrolidinium ring in a main chain thereof which is represented by the following formula (I) or (II) as a main repeating unit: 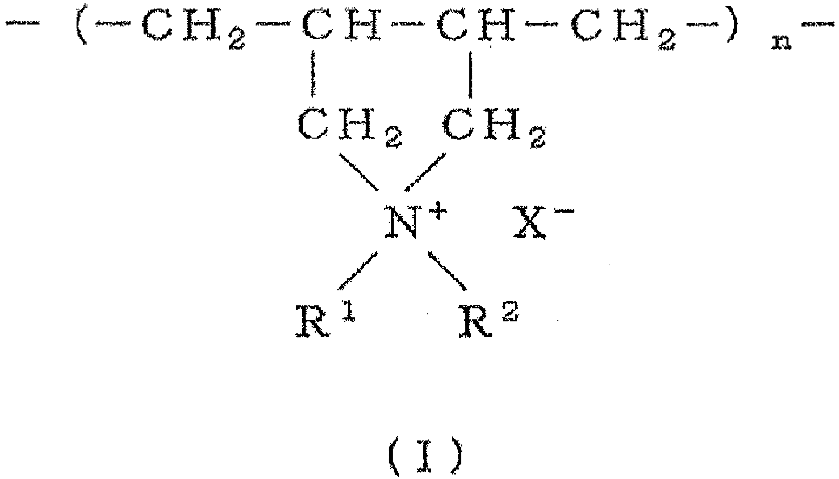 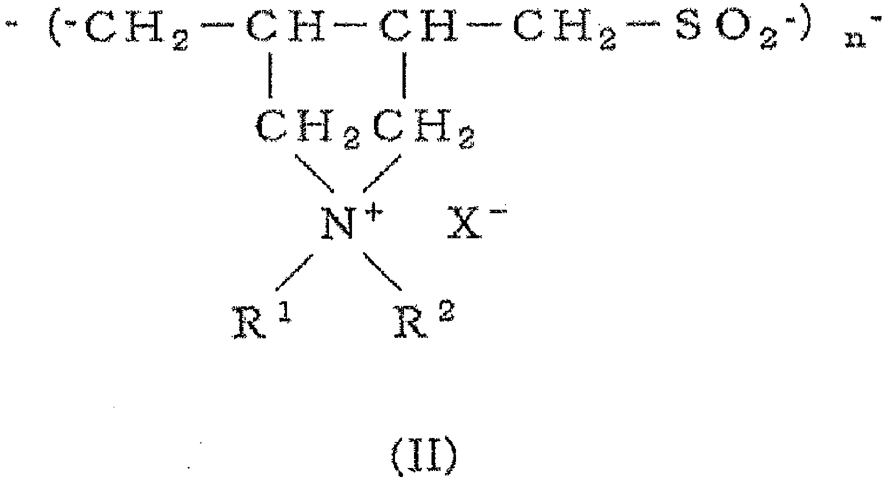 where in the structure represented by the formula (I) or (II), R¹ and R² are each an alkyl group having 1 to 4 carbon atoms or hydrogen, and these groups may be the same or different from each other, the alkyl group as R¹ and R² may be substituted with a hydroxyl group, an amide group, an amino group or an ether group, R¹ and R² may be chemically bonded to each other to form a ring structure, X⁻ may be any of a halogen ion, a nitric acid ion, a methanesulfonic acid ion, an ethanesulfonic acid ion, a monomethylsulfuric acid ion, a monoethylsulfuric acid ion, a trifluoracetic acid ion and a trichloroacetic acid ion.

3. A biaxially stretched polyester film according to claim 1 or 2, wherein the coating layer further comprises a crosslinking agent.

4. A biaxially stretched polyester film according to claim 3, wherein the crosslinking agent comprises at least one compound selected from the group consisting of methylolated or alkoxymethylolated melamine-based compounds and benzoguanamine-based compounds, urea-based compounds, acrylamide-based compounds, epoxy-based compounds, isocyanate-based compounds, carbodiimide-based compounds, oxazoline-based compounds, silane coupling agent-based compounds and titanium coupling agent-based compounds.

5. A biaxially stretched polyester film according to any one of claims 1 to 4, wherein a light diffusion layer is formed on the surface of the coating layer.

6. A biaxially stretched polyester film according to any one of claims 1 to 4, wherein a lens layer is formed on the surface of the coating layer.

## Patentansprüche

1. Biaxial gereckte Polyesterfolie, umfassend eine Überzugsschicht, welche Komponenten (A) und (B) umfasst:
(A) ein Polyurethanharz, umfassend als aufbauende Einheiten
(a1) ein Polycarbonatpolyol und
(a2) eine Verbindung, gebildet durch Quaternisieren einer tertiären Aminogruppe eines Kettenverlängerers, welcher die tertiäre Aminogruppe in einem Molekül davon aufweist, und
(B) ein kationisches Polymer-Antistatikmittel in der Form eines Polymers, umfassend eine Einheit mit einem quaternisierten Stickstoff als einer wiederkehrenden Einheit hiervon,
wobei die Überzugsschicht Komponenten (A) und (B) in einem Gewichtsverhältnis im Bereich von 40/60 bis 90/10 umfasst,
wobei die Überzugsschicht auf mindestens einer Oberfläche der Folie gebildet ist.

2. Biaxial gereckte Polyesterfolie nach Anspruch 1, wobei das kationische Polymer-Antistatikmittel (B) in der Form eines kationischen Polymers vorliegt, umfassend eine Einheit mit einem Pyrrolidiniumring in einer Hauptkette hiervon, welche wiedergegeben wird durch die folgende Formel (I) oder (II) als eine hauptsächliche wiederkehrende Einheit: 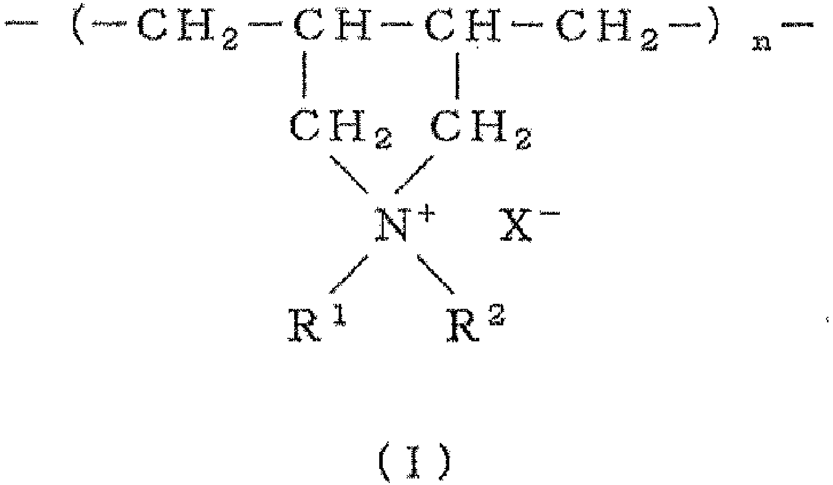 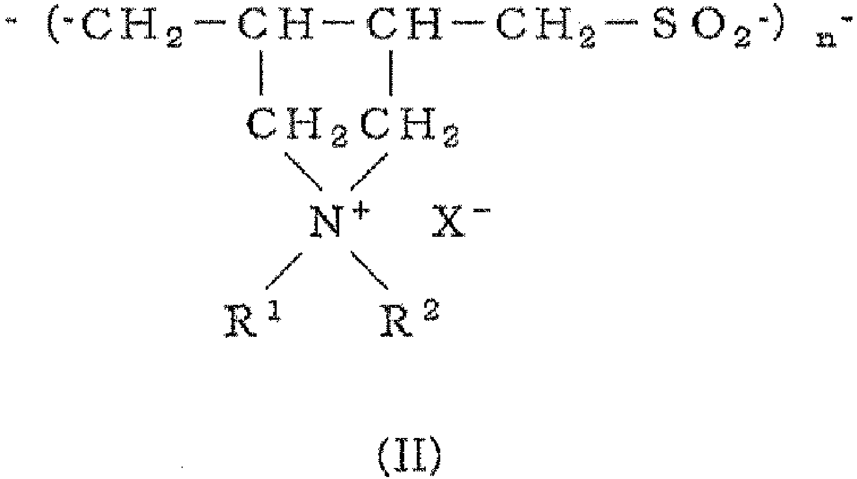 wobei in der durch die Formel (I) oder (II) wiedergegebenen Struktur R¹ und R² jeweils eine Alkylgruppe mit 1 bis 4 Kohlenstoffatomen oder Wasserstoff sind, und wobei diese Gruppen gleich oder voneinander verschieden sein können, wobei die Alkylgruppe als R¹ und R² substituiert sein kann mit einer Hydroxylgruppe, einer Amidgruppe, einer Aminogruppe oder einer Ethergruppe, R¹ und R² chemisch aneinander gebunden sein können, um eine Ringstruktur zu bilden, X⁻ irgendeines aus einem Halogenion, einem Salpetersäureion, einem Methansulfonsäureion, einem Ethansulfonsäureion, einem Monomethylschwefelsäureion, einem Monoethylschwefelsäureion, einem Trifluoressigsäureion und einem Trichloressigsäureion.

3. Biaxial gereckte Polyesterfolie nach Anspruch 1 oder 2, wobei die Überzugsschicht weiterhin ein Vernetzungsmittel umfasst.

4. Biaxial gereckte Polyesterfolie nach Anspruch 3, wobei das Vernetzungsmittel mindestens eine Verbindung umfasst, gewählt aus der Gruppe, bestehend aus methylolierten oder alkoxymethylolierten Verbindungen auf Melaninbasis und Verbindungen auf Benzoguanaminbasis, Verbindungen auf Harnstoffbasis, Verbindungen auf Acrylamidbasis, Verbindungen auf Epoxybasis, Verbindungen auf Isocyanatbasis, Verbindungen auf Carbodiimidbasis, Verbindungen auf Oxazolinbasis, Verbindungen auf Silankupplungsmittel-Basis und Verbindungen auf Titankupplungsmittel-Basis.

5. Biaxial gereckte Polyesterfolie nach mindestens einem der Ansprüche 1 bis 4, wobei auf der Oberfläche der Überzugsschicht eine Lichtdiffusionsschicht gebildet ist.

6. Biaxial gereckte Polyesterfolie nach mindestens einem Ansprüche 1 bis 4, wobei auf der Oberfläche der Überzugsschicht eine Entspiegelungsschicht gebildet ist.

## Revendications

1. Un film de polyester étiré biaxialement comprenant une couche de revêtement qui comprend des composants (A) et (B) :
(A) une résine de polyuréthane comprenant en tant qu'unités constitutionnelles
(a1) un polyol de polycarbonate
(a2) un composé formé par quaternisation d'un groupe amino tertiaire d'un agent d'allongement de chaîne ayant le groupe amino tertiaire dans une molécule de celui-ci, et
(B) un polymère cationique agent antistatique sous la forme d'un polymère comprenant une unité ayant un nitrogène quaternisé en tant qu'une unité récurrente de celui-ci,
dans lequel la couche de revêtement comprend les composants (A) et (B) dans un rapport de poids allant de 40 / 60 à 90 / 10,
la couche de revêtement étant formée sur au moins une surface du film.

2. Un film de polyester étiré biaxialement selon la revendication 1, dans lequel le polymère cationique agent antistatique (B) est sous la forme d'un polymère cationique comprenant une unité ayant un cycle de pyrrolidinium dans une châine principale de celui-ci qui est représenté par la formule (I) ou (II) suivante en tant qu'unité récurrente principale : 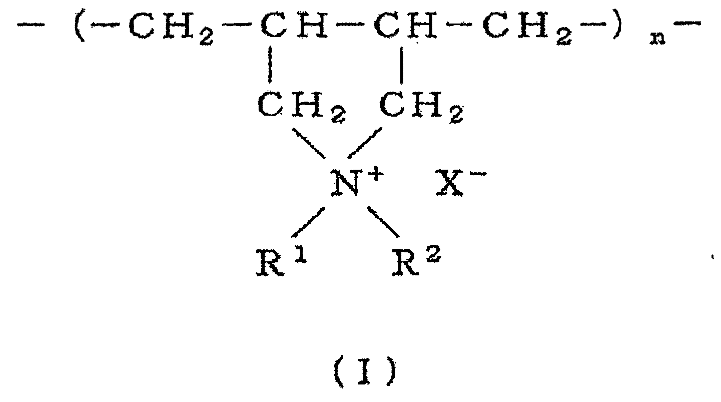 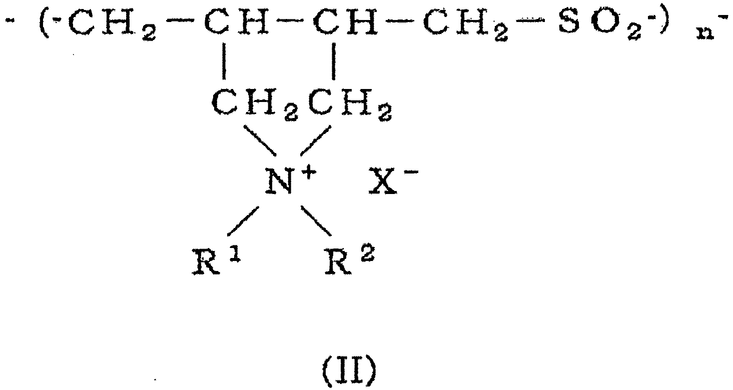 ou dans la structure représentée par la formule (I) ou (II), R¹ et R² sont chacun un groupe alkyl ayant 1 à 4 atomes de carbone ou de l'hydrogène, et ces groupes peuvent être les mêmes ou différents les uns des autres, le groupe alkyl en tant que R¹ et R² peut être substitué avec un groupe hydroxyle, un groupe amide, un groupe amino ou un groupe éther, R¹ et R² peuvent être lié chimiquement l'un à l'autre afin de former une structure d'anneau, X⁻ peut être un quelconque d'un ion halogénique, d'un ion d'acide nitrique, d'un ion d'acide méthanesulfonique, d'un ion d'acide éthanesulfonique, d'un ion d'acide monométhylsulfurique, d'un ion d'acide monoéthylsulfurique, d'un ion d'acide trifluoroacétique, et d'un ion d'acide trichloroacétique.

3. Un film de polyester étiré biaxialement selon la revendication 1 ou 2, dans lequel la couche de revêtement en outre comprend un agent de réticulation.

4. Un film de polyester étiré biaxialement selon la revendication 3, dans lequel l'agent de réticulation comprend au moins un composé, choisi parmi le groupe constitué par les composés methylolés ou alcoxymethylolés à base de mélamine et les composés à base de benzoguanamine, les composés à base d'urée, les composés à base d'acrylamide, les composés à base d'époxy, les composés à base d'isocyanate, les composés à base de carbodiimide, les composés à base d'oxazoline, les composés à base d'agent de liaison de silane et les composés à base d'agent de liaison de titane.

5. Un film de polyester étiré biaxialement selon l'une quelconque des revendications 1 à 4, dans lequel une couche de diffusion de lumière est formée sur la surface de la couche de revêtement.

6. Un film de polyester étiré biaxialement selon l'une quelconque des revendications 1 à 4, dans lequel un couche de lentille est formée sur la surface de la couche de revêtement.
